(19) **Europäisches Patentamt / European Patent Office / Office européen des brevets**

(11) **EP 2 811 380 A2**

(12) # EUROPEAN PATENT APPLICATION

(43) Date of publication:
**10.12.2014 Bulletin 2014/50**

(51) Int Cl.:
**G06F 3/044** *(2006.01)*    **G06F 3/041** *(2006.01)*

(21) Application number: **14150330.0**

(22) Date of filing: **07.01.2014**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.06.2013   CN 201310223797**

(71) Applicant: **FocalTech Systems, Ltd.**
**Grand Cayman (KY)**

</td><td>

(72) Inventors:
- **Mo, Lianghua**
  **518057 Schenzhen (CN)**
- **Li, Chen**
  **518057 Shenzhen (CN)**

(74) Representative: **HGF Limited**
**Delta House**
**50 West Nile Street**
**Glasgow G1 2NP (GB)**

</td></tr>
</table>

(54) **Capacitive touch screen**

(57)    The embodiments of the disclosure provide a capacitive touch screen, including: a substrate; a plurality of sensing electrodes provided on the substrate, the plurality of sensing electrodes being arranged in a two-dimensional array; and a touch control chip bound to the substrate, the touch control chip being connected with each of the plurality of sensing electrodes via a corresponding wire. The capacitive touch screen according to the embodiments of the disclosure solves the problem of errors caused by noise transmission between electrodes in the prior art on the premise of achieving multi-touch, thereby significantly improves the signal-to-noise ratio.

**FIG. 1**

**Description**

The present application claims the priority of Chinese Patent Application No. 201310223797.7, entitled as "Capacitive Touch Screen", and filed with the Chinese Patent Office on June 06, 2013.

**FIELD OF THE INVENTION**

The invention relates to the field of touch control technique, and particularly to a capacitive touch screen.

**BACKGROUND OF THE INVENTION**

At present, the capacitive touch screen is widely applied to various electronic products, and has gradually penetrated into various fields of people's life and work. The size of the capacitive touch screen is increasing day by day, from 3 inches to 6.1 inches for a smart phone and to about 10 inches for a panel PC; the application field of the capacitive touch screen can further be extended to smart TVs etc. However, the capacitive touch screen in the prior art generally has the problems of poor anti-interference performance, low scanning frequency, big volume and complex manufacturing process etc.

**SUMMARY OF THE INVENTION**

In view of this, the embodiments of the disclosure provide a capacitive touch screen that can solve at least one of the problems described above.
The capacitive touch screen provided by the embodiments of the disclosure includes:

a substrate;

a plurality of sensing electrodes provided on the substrate, the plurality of sensing electrodes being arranged as a two-dimensional array; and

a touch control chip bound to the substrate, the touch control chip being connected with each of the plurality of sensing electrodes via a corresponding wire.

Preferably, the substrate is a glass substrate, and the touch control chip is bound to the substrate in a chip-on-glass way; or
the substrate is a flexible substrate, and the touch control chip is bound to the substrate in a chip-on-film way; or
the substrate is a printed circuit board, and the touch control chip is bound to the substrate in a chip-on-board way.
Preferably, the touch control chip is configured to detect a self-capacitance of each of the plurality of sensing electrodes.
Preferably, the touch control chip is configured to detect the self-capacitance of each of the plurality of sensing electrodes by:

driving the sensing electrode by a voltage source or current source; and

detecting a voltage or a frequency or an electric quantity on the sensing electrode.

Preferably, the touch control chip is configured to detect the self-capacitance of each of the plurality of sensing electrodes by:

driving and detecting the sensing electrode, and meanwhile driving the rest of the plurality of sensing electrodes; or

driving and detecting the sensing electrode, and meanwhile driving sensing electrodes around the sensing electrode.

Preferably, for the plurality of sensing electrodes, the voltage source or current source has a same frequency; or
for the plurality of sensing electrodes, the voltage source or current source has two or more frequencies.
Preferably, the touch control chip is configured to detect the self-capacitance of each of the plurality of sensing electrodes by:

detecting all of the plurality of sensing electrodes simultaneously; or

detecting the plurality of sensing electrodes group by group.

Preferably, the touch control chip is configured to determine a touch position according to a two-dimensional capacitance variation array.

Preferably, the touch control chip is further configured to adjust a sensitivity or a dynamic range of touch detection by parameters of the voltage source or current source, and the parameters comprise any one of amplitude, frequency and timing or a combination thereof.

Preferably, the sensing electrode is in a shape of a rectangle, a diamond, a triangle, a circle or an ellipse.

Preferably, the capacitive touch screen comprises a plurality of touch control chips bound to the substrate, and each of the plurality of touch control chips is adapted to detect a corresponding part of sensing electrodes in the plurality of sensing electrodes.

Preferably, the clocks of the plurality of touch control chips are synchronous or asynchronous.

Preferably, the wire is arranged in a layer the same as the plurality of sensing electrodes; or
the wire is arranged in a layer different from the layer where the plurality of sensing electrodes are located.

The capacitive touch screen according to the embodiments of the disclosure uses a plurality of sensing electrodes arranged in a two-dimensional array, and thus solves the problem of errors caused by noise transmission between electrodes in the prior art on the premise of achieving Multi-Touch, thereby significantly improving the SNR (Signal-to-Noise Ratio). By applying the scheme of the embodiments of the disclosure, the noise from a power supply of a touch screen is greatly eliminated, and also the interferences from RF and from other noise sources such as LCD (Liquid Crystal Display) modules can be reduced.

In the capacitive touch screen according to the embodiments of the disclosure, the touch control chip is connected with each of the sensing electrodes via a corresponding wire, and is bound to the substrate in a COG, COF or COB way, thereby the possible difficulties caused by the large number of pins can be avoided, and the whole volume can be reduced. Moreover, by detecting the sensing electrodes simultaneously or group by group, the scanning time can be significantly reduced, thereby avoiding the possible problems caused by the large number of sensing electrodes.

**BRIEF DESCRIPTION OF THE DRAWINGS**

Figure 1 is a schematic diagram of a capacitive touch screen provided by an embodiment of the disclosure;

Figure 2 is a top view of a sensing electrode array according to an embodiment of the disclosure;

Figures 3 to 6 show a sensing electrode driving method according to an embodiment of the disclosure;

Figure 7 shows four application scenarios of a capacitive touch screen according to an embodiment of the disclosure;

Figure 8 shows a signal flow graph of a touch control chip according to an embodiment of the disclosure;

Figure 9A shows an example of calculating coordinates of a touch position by using a centroid algorithm; and

Figure 9B shows calculation of coordinates of a touch position by using the centroid algorithm in the presence of noise.

**DETAILED DESCRIPTION OF THE INVENTION**

To make the objects, features and advantages of the disclosure more clear and easy to be understood, the technical solutions of the embodiments of the disclosure are illustrated hereinafter in conjunction with the drawings in the embodiments of the disclosure. Apparently, the described embodiments are just a part of the embodiments of the invention. Based on the embodiments of the disclosure, any other embodiments obtained by those skilled in the art without creative efforts should fall within the scope of protection of the invention. For ease of illustration, sectional views showing the structure are enlarged partially rather than using a common scale, and the views are only examples, which should not be understood as limiting the protection scope of the invention. Furthermore, in an actual manufacture process, three-dimensioned sizes, i.e. length, width and depth should be included.

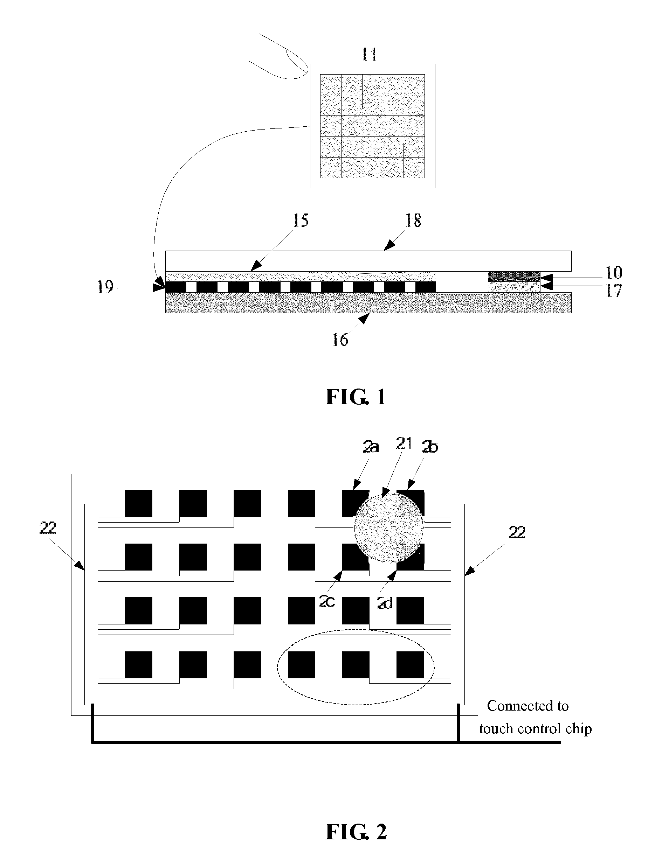

Figure 1 is a schematic diagram of a capacitive touch screen provided by an embodiment of the disclosure. As shown in Figure 1, the capacitive touch screen 11 includes: a substrate 16; a plurality of sensing electrodes 19 provided on the substrate, the plurality of sensing electrodes 19 being arranged in a two-dimensional array; and a touch control chip 10 bound to the substrate 16, the touch control chip 10 being connected with each of the plurality of sensing electrodes 19 via a corresponding wire.

The substrate 16 can be transparent, for example it may be a glass substrate or a flexible substrate; or the substrate 16 can also be non-transparent, for example it may be a printed circuit board. A plurality of sensing electrodes 19 are provided on the substrate 16, and the plurality of sensing electrodes 19 are arranged in a two-dimensional array which can be a rectangular array or a two-dimensional array of any other shapes. For the capacitive touch screen, each sensing electrode 19 is a capacitive sensor, the capacitance of which changes when a corresponding position on the touch screen is touched.

Optionally, a cover lens is provided above the sensing electrodes 19 to protect the sensing electrodes 19.

Each of the sensing electrodes 19 is connected to the touch control chip 10 via a wire, and the touch control chip 10 is bound to the substrate 16. Due to being connected with each of the sensing electrodes 19 via a wire, the touch control chip 10 has many pins, therefore, the difficulties of conventional packaging can be avoided by binding the touch control chip 10 on the substrate 16. Specifically, the touch control chip 10 can be bound to the substrate 16 in a Chip-on-Glass (COG for short) way or a Chip-on-Film (COF for short) way or a Chip-on-Board (COB for short) way. According to the embodiment, an anisotropic conductive film (ACF) 17 can be provided between the touch control chip 10 and the substrate 16.

Moreover, the connection of the conventional flexible printed circuit board (FPC) requires to reserve space for the touch control chip and FPC in hardware, which is not beneficial to simplicity of the system. However, by the COG way or COF way, the touch control chip and the touch screen are integrated, thereby significantly reducing the distance between the two, and thereby reducing the whole volume. Moreover, since the sensing electrode is generally formed by etching indium tin oxide (ITO) on the substrate, and the touch control chip is on the substrate, therefore the line connecting the sensing electrode and the touch control chip can be done in one ITO etching, thereby significantly simplifying the manufacturing process.

Figure 2 is a top view of a sensing electrode array according to an embodiment of the disclosure. Those skilled in the art should understand that, only one arrangement way of the sensing electrodes is shown in Figure 2, however in specific implementation, the sensing electrodes can be arranged in any two-dimensional array. Moreover, the spacing between the sensing electrodes in any direction can be equal or unequal. Those skilled in the art should also understand that, the number of the sensing electrodes can be more than the number shown in Figure 2.

Those skilled in the art should understand that, only one shape of the sensing electrode is shown in Figure 2. According to other embodiments, the sensing electrode can be in a shape of a rectangle, a diamond, a triangle, a circle or an ellipse, or can also be in an irregular shape. And sawtooth can also be provided on the edges of the touch sensing electrode. The pattern of the sensing electrodes can be identical, or can also be not identical. For example, the sensing electrodes located in the central area adopt a diamond structure, and the sensing electrodes located on edges adopt a triangle structure. Moreover, the size of the sensing electrodes can be identical, or can also be not identical. For example, the sizes of the sensing electrodes near the inside are relatively large, and the sizes of the sensing electrodes near the edges are relatively small, which is beneficial for routing and the touch precision of edges.

Each of the sensing electrodes has a wire which is led out, and the wire is arranged in the space between the sensing electrodes. Generally, the wire is made as uniform as possible, and the routing is made as short as possible. Moreover, the routing range of the wires is made as narrow as possible on the premise of ensuring safe distance, thereby reserving more area for the sensing electrodes to enable more accurate sensing.

Each of the sensing electrodes can be connected to a bus 22 via a wire, and the wires are connected directly with the pins of the touch control chip via the bus 22 or connected with the pins of the touch control chip via the bus 22 after being sorted. For the touch screen with a large screen, the number of the sensing electrodes may be very large. In this case, a single touch control chip can be used to control all the sensing electrodes; or the screen is divided into several regions, and a plurality of touch control chip are used to respectively control the sensing electrodes in different regions, and clock synchronization can be implemented between the plurality of touch control chips. At this time, the bus 22 can be divided into several bus sets, in order to connect with different touch control chips. Each of the touch control chips controls the same number of sensing electrodes, or controls a different number of sensing electrodes.

For the sensing electrode array shown in Figure 2, the routing can be achieved in a same layer with the sensing electrode array. For the sensing electrode array having other structures, if routing in the same layer is difficult to be achieved, the wire can also be arranged in another layer different from the layer where the sensing electrode array is located, and the wire is connected with the sensing electrode via a via hole.

The sensing electrode array shown in Figure 2 is based on a touch detection principle of self-capacitance. Each sensing electrode corresponds to a specific position on the screen. In Figure 2, 2a-2d represents different sensing electrodes. 21 represents a touch, and when a touch occurs at a position corresponding to a certain sensing electrode, charges on this sensing electrode changes, therefore, whether a touch event occurs on the sensing electrode can be known by detecting the charges (current or voltage) on this sensing electrode. Generally, this can be achieved by converting an analog quantity into a digital quantity by an Analog-to-Digital converter (ADC). The charge change amount of the sensing electrode is related to the covered area of the sensing electrode. For example, the charge change amount of the sensing electrodes 2b and 2d is greater than the charge change amount of the sensing electrodes 2a and 2c in Figure 2.

Each position on the screen has a corresponding sensing electrode, and no physical connection exists between the sensing electrodes, therefore the capacitive touch screen provided by the embodiments of the disclosure can achieve a true Multi-Touch, thereby avoiding the problem of ghost points in the self-capacitance touch detection in the prior art.

The sensing electrode layer can be combined with a display screen by a surface sticking way; or the sensing electrode layer can be manufactured inside the display screen, such as an In-Cell touch screen; or the sensing electrode layer can be manufactured on the upper surface of the display screen, such as an On-Cell touch screen.

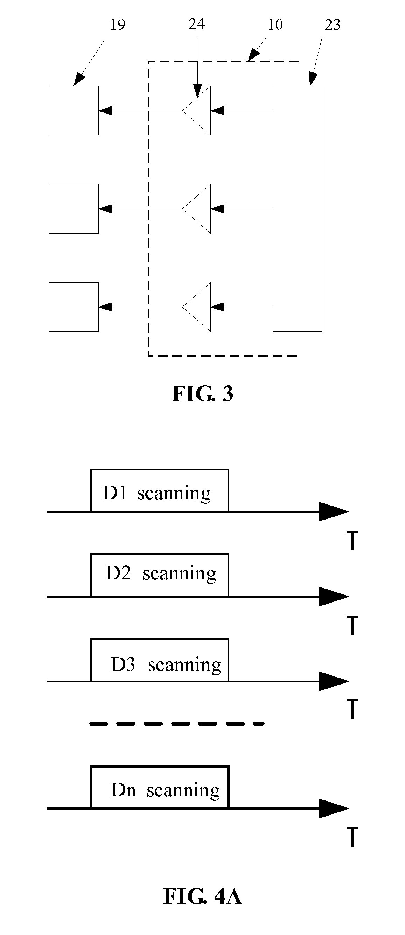

Figure 3 to Figure 7 show a sensing electrode driving method according to an embodiment of the disclosure. As shown in Figure 3, a sensing electrode 19 is driven by a driving source 24, and the driving source 24 may be a voltage source or a current source. For different sensing electrodes 19, the driving source 24 does not necessarily use the same structure. For example, the voltage source can be used for some of the sensing electrodes 19, and the current source is used for some of the sensing electrodes 19. Moreover, for different sensing electrodes 19, the frequency of the driving source 24 can be the same or different. The timing control unit 23 controls the operation timing of each of the driving sources 24.

There are multiple choices for the driving timing of each of the sensing electrodes 19. In the following, n sensing electrodes (D1, D2......, Dj, Dk......Dn) are taken as an example for illustration.

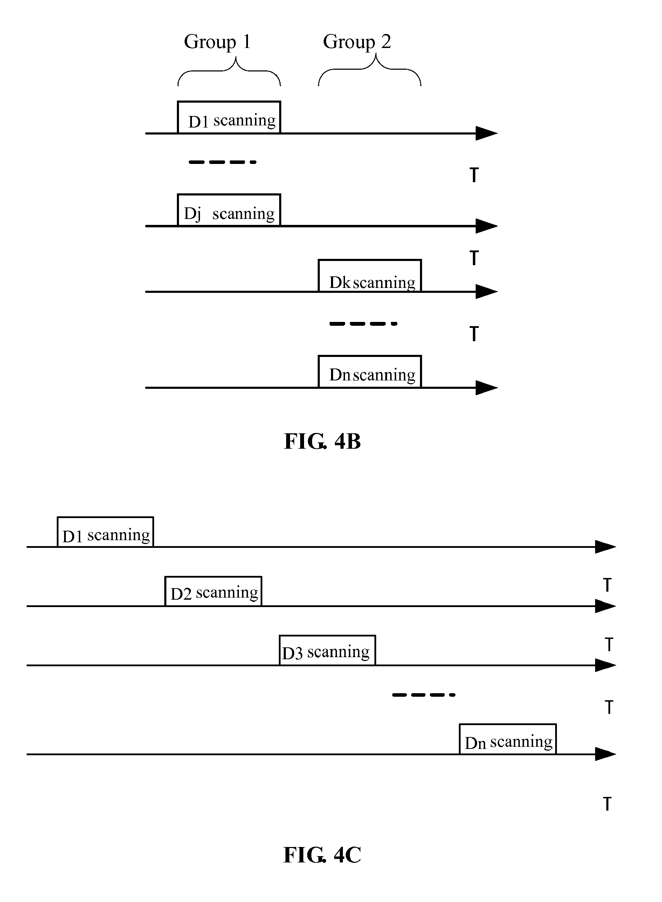

As shown in Figure 4A, all the sensing electrodes are simultaneously driven and simultaneously detected. In this way, the time for finishing a scan is the shortest, and the number of the driving sources is the most (identical with the number of the sensing electrodes). As shown in Figure 4B, the driving sources of the sensing electrodes are divided into several groups, and each group drives sensing electrodes in a specific region in sequence. This way can achieve multiplexing of the driving sources, but the scanning time is increased, however, by choosing a proper group number, the multiplexing of the driving sources and the scanning time can reach a compromise.

Figure 4C shows a scanning way of conventional mutual capacitance touch detection. Assumed that there are n driving channels (TX), and the scanning time for each TX is Ts, then the time for scanning one frame is n*Ts. However, by using the sensing electrode driving method of the embodiment, all the sensing electrodes can be detected simultaneously, the shortest time for scanning one frame is only Ts. That is to say, compared with the conventional mutual capacitance touch detection, the scanning frequency can be increased by n times by using the scheme of the embodiment.

For a mutual capacitance touch screen with 40 driving channels, if the scanning time for each driving channel is 500us, the scanning time for the whole touch screen (one frame) is 20ms, i.e. the frame rate is 50Hz. Generally, 50Hz can not achieve the requirements for a good experience. The scheme of the embodiments can solve this problem. By using the sensing electrodes arranged in a two-dimensional array, all the sensing electrodes can be detected simultaneously, and in the case that the detection time for each sensing electrode maintains 500us, the frame rate reaches 2000Hz. This greatly exceeds the application requirements of most touch screens. The redundant scan data can be used for such as anti-interference or touch track optimization by a digital signal processing terminal, thereby obtaining a better effect.

In-Cell touch screen performs scanning by using a field blanking time for each frame. However, the field blanking time for each frame is only 2-4ms, and the conventional scanning time based on mutual capacitance often reaches 5ms or even more. In order to achieve a usage of the In-Cell screen, generally reducing the scanning time for mutual capacitance touch detection, specifically, reducing the scanning time for each channel, but this method reduces the SNR of the In-Cell screen, and affects the touch experience. The scheme of the embodiments can solve this problem. For example, for an In-Cell screen with 10 driving channels and a conventional mutual capacitance detection scanning time of 4ms, the scanning time for each channel is 400us. By using the scheme of the embodiments of the disclosure, all the electrodes are simultaneously driven and detected, and the time for scanning all the electrodes once is only 400us. For the In-Cell screen described above, if the scanning time for touch detection is still 4ms, then there is a lot of time remained. The saved time can be used for multiple times of repeated detection or variable frequency detection and other detections, thereby greatly increasing the SNR of detection signal and anti-interference capability, thereby obtaining a better effect.

Preferably, the self-capacitance of each of the sensing electrodes is detected. The self-capacitance of the sensing electrode can be earth capacitance thereof.

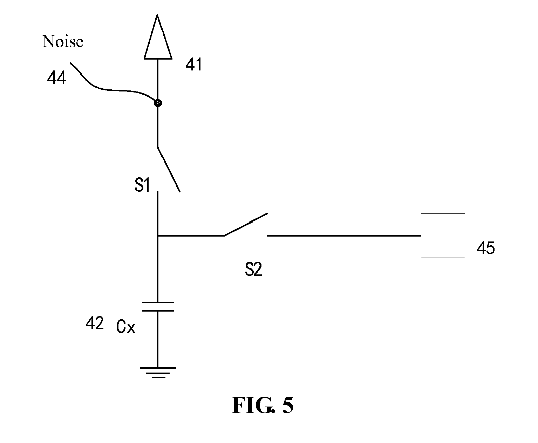

As an example, a charge detection method can be used. As shown in Figure 5, the driving source 41 provides a constant voltage V1. The voltage V1 can be a positive voltage, a negative voltage or the earth. S1 and S2 represent two controlled switches, 42 represents the earth capacitance of the sensing electrode, 45 represents a charge receiver module, and the charge receiver module 45 can clamp the input voltage to a specified value V2 and measure the quantity of the input or output charges. At first, S1 is closed and S2 is open, and the top plate of Cx is charged to the voltage V1 provided by the driving source 41; then S1 is open and S2 is closed, and Cx exchanges charges with the charge receiver module 45. Assumed that charge transfer quantity is Q1, then the voltage of the top plate of Cx changes to V2, then from $C=Q/\Delta V$, $Cx=Q1/(V2-V1)$ is obtained, thereby capacitance detection is achieved.

As another example, a current source can also be used, or the self-capacitance of a sensing electrode can be obtained by the frequency of the sensing electrode.

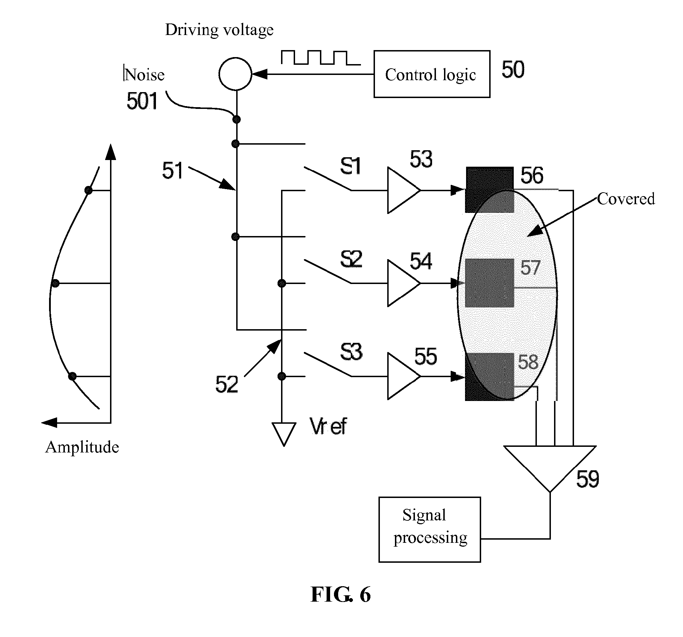

Optionally, in a case of using a plurality of driving sources, when a sensing electrode is detected, a driving source voltage different from the driving source voltage on the detected sensing electrode can be chosen for the sensing electrodes adjacent to or around the detected sensing electrode. For the purpose of brevity, Figure 6 shows only three sensing electrodes: one detected electrode 57 and two adjacent electrodes 56 and 58. Those skilled in the art should understand that, the following examples are also applicable for the case including more sensing electrodes.

The driving source 54 connected with the detected electrode 57 is connected to a voltage source 51 via the switch S2, to drive the detected electrode 57; however, the sensing electrodes 56 and 58 adjacent to the detected electrode 57 are connected with the driving sources 53 and 55, and sensing electrodes 56 and 58 can be connected to the voltage source 51 or a specific reference voltage 52 (Vref, for example ground) via the switches S1 and S3. If the switches S1 and S3 are connected to the voltage source 51, i.e. the detected electrode and the electrodes around the detected electrode are driven simultaneously by using the same voltage source, the voltage difference between the detected electrode and the electrodes around the detected electrode can be reduced, which is beneficial for reducing the capacitance of the detected electrode and preventing a false touch formed by water drops.

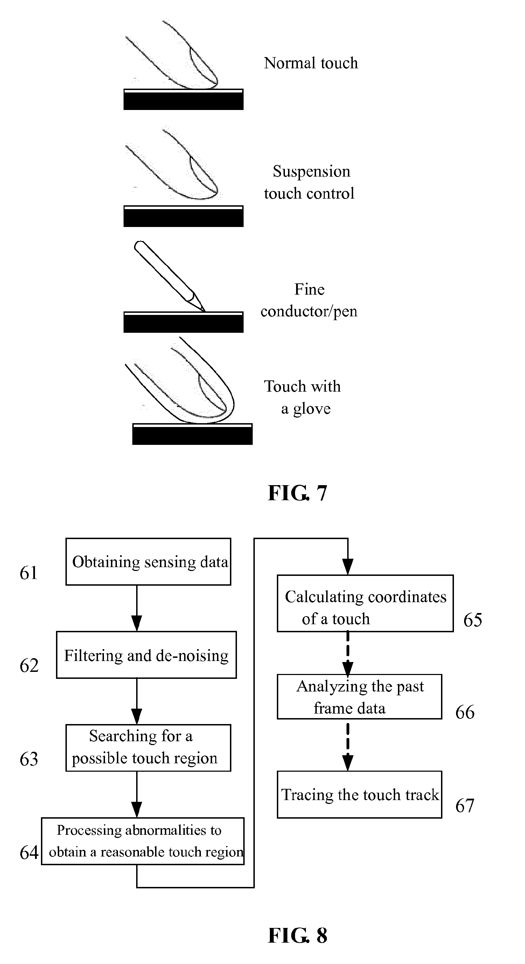

Preferably, the touch control chip is configured to adjust a sensitivity or a dynamic range of touch detection by parameters of the driving source, and the parameters include any one of amplitude, frequency and timing or a combination thereof. As an example, as shown in Figure 7, the parameters (for example, driving voltage, current and frequency) of driving sources and the timing of each driving source can be controlled by a control logic of a signal driving unit 50 in the touch control chip. By these parameters, different circuit operation states (such as high sensitivity, medium sensitivity or low sensitivity) or different dynamic ranges can be adjusted.

Different circuit operation state can be applicable for different application scenarios. Figure 7 shows four application scenarios of a capacitive touch screen of an embodiment of the disclosure: normal finger touch, finger suspension touch control, active/passive pen or fine conductor, and touch with a glove. Combining with the parameters described above, detection for one or more normal touches and one or more fine conductor touches can be achieved. Those skilled in the art should understand that, although the signal receiver unit 59 and the signal driving unit 50 shown in Figure 6 are separated, they can be implemented in one circuit in other embodiments.

Figure 8 shows a signal flow graph of a touch control chip according to an embodiment of the disclosure. When there is a touch on the sensing electrode, the capacitance of the sensing electrode can be changed, then the change amount is converted into a digital value by an ADC, and the touch information can be restored. Generally, the change amount of the capacitance is related to the area of the sensing electrode covered by the touch object. The signal receiver unit 59 receives sensing data of the sensing electrode, and the touch information is restored from the sensing data via the signal processing unit.

As an example, a data processing method of the signal processing unit is specifically illustrated hereinafter.

Step 61: obtaining sensing data.

Step 62: filtering and de-noising the sensing data. The purpose of this step is to eliminate noise in the original image as much as possible, in order to facilitate subsequent calculation. A space-domain, time-domain or threshold filtering method can be applied in this step.

Step 63: searching possible touch regions according to the sensing data. These regions include true touch regions and invalid signals. Invalid signals include a large area touch signal, a power supply noise signal, an abnormal suspension signal and a water drop signal etc. In these invalid signals, some signals are similar to true touches, some signals may interfere with true touches, and some signals should not be resolved into normal touches.

Step 64: processing abnormalities to eliminate the invalid signals described above and to obtain a reasonable touch region.

Step 65: calculating the coordinates of the touch position according to data of the reasonable touch region.

Preferably, the coordinates of the touch position can be determined according to a two-dimensional capacitance variation array. Specifically, the centroid algorithm can be used to determine the coordinates of the touch position according to a two-dimensional capacitance variation array.

As an example, the touch control chip can include: a signal driving/receiving unit configured to drive each of the sensing electrodes and receive the sensing data from each of the sensing electrodes; and a signal processing unit configured to determine a touch position according to the sensing data. Specifically, the signal driving/receiving unit can be configured to drive the sensing electrode by using a voltage source or current source; the signal processing unit can be configured to calculate the self-capacitance (such as earth capacitance) of the sensing electrode by the voltage or frequency of the sensing electrode, and determine the touch position according to a change amount of the self-capacitance.

Moreover, the signal driving/receiving unit can be configured to that: for each of the sensing electrodes, while the sensing electrode is driven, the rest of the sensing electrodes are driven simultaneously; or for each of the sensing electrodes, while the sensing electrode is driven, the sensing electrodes around the sensing electrode are driven simultaneously.

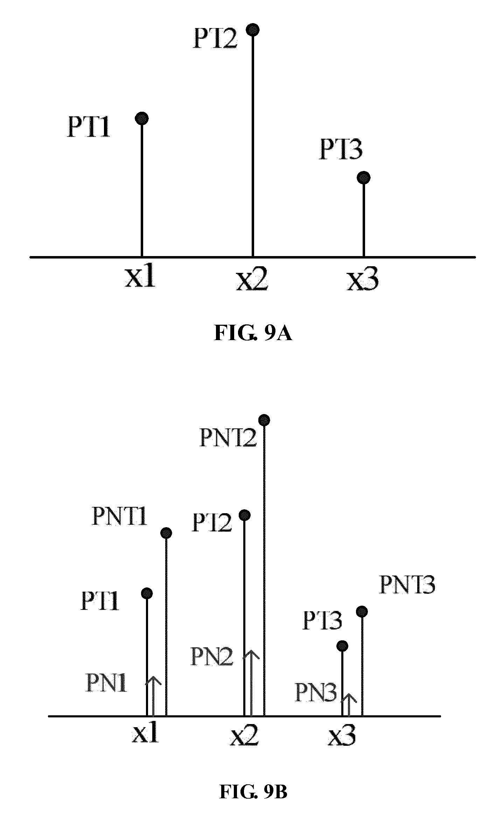

Figure 9A shows an example of calculating the coordinates of a touch position by using a centroid algorithm. For the purpose of brevity, only the coordinates of the touch position in one dimension is calculated in the following description. Those skilled in the art should understand that, the same or similar method can be used to obtain complete coordinates of the touch position. Assumed that the sensing electrodes 56-58 shown in Figure 7 are covered by a finger, the corresponding sensing data are respectively PT1, PT2, PT3. Assumed that the horizontal coordinates is determined as x direction, and the vertical coordinates is determined as y direction, and the horizontal coordinates corresponding to the sensing electrodes 56-58 are respectively x1, x2 and x3. Then the horizontal coordinates of a finger touch position obtained by using the centroid algorithm is:

$$X_{touch} = \frac{PT1 * x1 + PT2 * x2 + PT3 * x3}{PT1 + PT2 + PT3} \tag{1}$$

Here the one-dimension centroid algorithm is only an example, and the actual coordinates can be determined by a two-dimensional centroid algorithm.

Optionally, a step 66 can be performed after obtaining the coordinates of the touch position: analyzing past frame data in order to obtain current frame data by using multi-frame data.

Optionally, a step 67 can be performed after obtaining the coordinates of the touch position: tracing the touch track according to multi-frame data. Moreover, event information can also be obtained and submitted according to user's operation process.

The capacitive touch screen according to embodiments of the disclosure can solve the problem of noise superimposition in the prior art on the premise of achieving multi-touch.

Using introducing the common mode noise of the power supply at a position 501 in Figure 7 as an example, the effect of noise to calculation of the touch position is analyzed hereinafter.

In a touch system based on mutual capacitance touch detection in the prior art, there are a plurality of driving channels (TX) and receiving channels (RX), and each of the RX is connected with all TX. When a common-mode interference signal is introduced in system, the noise may be conducted in the whole RX due to the connectivity of RX. Particularly, when there are a plurality of noise sources on one RX, noise from these noise sources may be superimposed, thereby increasing the amplitude of the noise. The noise makes the voltage signal measured on the detected capacitor swing, which leads to a false alarm from a non-touch point.

In the capacitive touch screen provided by the embodiments of the disclosure, there is no physical connection between the sensing electrodes before the sensing electrodes are connected to the inside of the chip, the noise can not be conducted and superimposed between the sensing electrodes, thereby avoiding a false alarm.

Taking the voltage detection method as an example, the noise may cause change of a voltage on the touched electrode, and cause the change of the sensing data on the touched electrode. According to the principle of self-capacitance touch detection, both the induction value generated by noise and the induction value generated by a normal touch are proportional to the covered area of the touched electrode.

Figure 9B shows calculation of coordinates of a touch position by using a centroid algorithm in the presence of noise. Assumed that the induction values caused by a normal touch are respectively PT1, PT2, PT3, the induction values caused by noise are PN1, PN2, PN3, then (using the sensing electrodes 56-58 as an example):

$$PT1 \propto C58, \quad PT2 \propto C57, \quad PT3 \propto C56$$

$$PN1 \propto C58, \quad PN2 \propto C57, \quad PN3 \propto C56$$

where PN1 = K*PT1, PN2 = K*PT2, PN3 = K*PT3, wherein, k is a constant.

when the voltage polarity of noise and the voltage polarity of the driving source are identical, the final sensing data due to voltage superimposition is:

$$PNT1 = PN1+PT1 = (1+K)*PT1$$

$$PNT2 = PN2+PT2 = (1+K)*PT2$$

$$PNT3 = PN3+PT3 = (1+K)*PT3$$

Then, the coordinates obtained by using a centroid algorithm is:

$$X_{touch} = \frac{PNT1 * x1 + PNT2 * x2 + PNT3 * x3}{PNT1 + PNT2 + PNT3}$$

$$= \frac{(1+K)*PT1*x1 + (1+K)*PT2*x2 + (1+K)*PT3*x3}{(PT1+PT2+PT3)*(1+K)}$$

$$= \frac{PT1*x1 + PT2*x2 + PT3*x3}{(PT1+PT2+PT3)} \tag{2}$$

It is clear that, equation (2) and equation (1) are equal. Therefore, the capacitive touch screen of the embodiments of the disclosure is immune to the common-mode noise. As long as the noise does not exceed the dynamic range of the system, the finally determined coordinates are not affected.

When the voltage polarity of noise and the voltage polarity of the driving source are opposite, the effective signal will be lowered. If the lowered effective signal can be detected, it can be known from the above analysis that the finally determined coordinates are not affected. If the lowered effective signal can not be detected, data of the current frame becomes invalid. However, since the scanning frequency of the capacitive touch screen provided by the embodiments of the disclosure can be very high, and can reach N (normally N is more than 10) times of the conventional scanning frequency, the data of the current frame can be restored by multi-frame data using this feature. Those skilled in the art should understand that, since the scanning frequency is much more than the report rate actually required, the processing by using multi-frame data may not affect the normal report rate.

Similarly, when the noise exceeds a dynamic range of the system to a certain extent, multi-frame data can be used to correct the current frame, thereby obtaining correct coordinates. Inter-frame processing method is also applicable for the interference from RF or from other noise sources such as LCD module.

The description of the embodiments herein enables those skilled in the art to implement or use the present invention. Numerous modifications to the embodiments will be apparent to those skilled in the art, and the general principle herein can be implemented in other embodiments without deviation from the scope of the present invention. Therefore, the present invention will not be limited to the embodiments described herein, but in accordance with the widest scope consistent with the principle and novel features disclosed herein.

**Claims**

1. A capacitive touch screen, comprising:

   a substrate;
   a plurality of sensing electrodes provided on the substrate, the plurality of sensing electrodes being arranged in a two-dimensional array; and

a touch control chip bound to the substrate, the touch control chip being connected with each of the plurality of sensing electrodes via a corresponding wire.

2. The capacitive touch screen according to claim 1, wherein
the substrate is a glass substrate, and the touch control chip is bound to the substrate in a chip-on-glass way; or
the substrate is a flexible substrate, and the touch control chip is bound to the substrate in a chip-on-film way; or
the substrate is a printed circuit board, and the touch control chip is bound to the substrate in a chip-on-board way.

3. The capacitive touch screen according to claim 1, wherein the touch control chip is configured to detect a self-capacitance of each of the plurality of sensing electrodes.

4. The capacitive touch screen according to claim 3, wherein the touch control chip is configured to detect the self-capacitance of each of the plurality of sensing electrodes by:

driving the sensing electrode by a voltage source or current source; and
detecting a voltage or a frequency or an electricity quantity on the sensing electrode.

5. The capacitive touch screen according to claim 3, wherein the touch control chip is configured to detect the self-capacitance of each of the plurality of sensing electrodes by:

driving and detecting the sensing electrode, and meanwhile driving the rest of the plurality of sensing electrodes; or
driving and detecting the sensing electrode, and meanwhile driving sensing electrodes around the sensing electrode.

6. The capacitive touch screen according to claim 4, wherein
for the plurality of sensing electrodes, the voltage source or current source has a same frequency; or
for the plurality of sensing electrodes, the voltage source or current source has two or more frequencies.

7. The capacitive touch screen according to claim 3, wherein the touch control chip is configured to detect the self-capacitance of each of the plurality of sensing electrodes by:

detecting all of the plurality of sensing electrodes simultaneously; or
detecting the plurality of sensing electrodes group by group.

8. The capacitive touch screen according to claim 3, wherein the touch control chip is configured to determine a touch position according to a two-dimensional capacitance variation array.

9. The capacitive touch screen according to claim 4, wherein the touch control chip is further configured to adjust a sensitivity or a dynamic range of touch detection by parameters of the voltage source or current source, and the parameters comprise any one of amplitude, frequency and timing or a combination thereof.

10. The capacitive touch screen according to claim 1, wherein the sensing electrode is in a shape of a rectangle, a diamond, a triangle, a circle or an ellipse.

11. The capacitive touch screen according to claim 1, wherein the capacitive touch screen comprises a plurality of touch control chips bound to the substrate, and each of the plurality of touch control chips is adapted to detect a corresponding part of sensing electrodes in the plurality of sensing electrodes.

12. The capacitive touch screen according to claim 11, wherein the clocks of the plurality of touch control chips are synchronous or asynchronous.

13. The capacitive touch screen according to claim 1, wherein
the wire is arranged in a same layer with the plurality of sensing electrodes; or
the wire is arranged in a layer different from the layer where the plurality of sensing electrodes are located.

**FIG. 1**

Connected to
touch control chip

**FIG. 2**

**FIG. 3**

D1 scanning

T

D2 scanning

T

D3 scanning

T

Dn scanning

T

**FIG. 4A**

Group 1        Group 2

D1 scanning

- - - -

T

Dj  scanning

T

Dk scanning

T

- - - -

Dn scanning

T

**FIG. 4B**

D1 scanning

D2 scanning

T

D3 scanning

T

- - - -

Dn scanning

T

T

**FIG. 4C**

Noise

44

41

S1

S2

42 Cx

45

**FIG. 5**

Driving voltage

Noise

501

51

52

Amplitude

Control logic    50

S1    53    56

Covered

S2    54    57

S3    55    58

Vref

59

Signal
processing

**FIG. 6**

Normal touch

Suspension
touch control

Fine
conductor/pen

Touch with
a glove

**FIG. 7**

61  Obtaining sensing data

62  Filtering and de-noising

63  Searching for a
possible touch region

64  Processing abnormalities to
obtain a reasonable touch region

65  Calculating coordinates
of a touch

66  Analyzing the past
frame data

67  Tracing the touch track

**FIG. 8**

FIG. 9A

FIG. 9B

**EP 2 811 380 A2**

**REFERENCES CITED IN THE DESCRIPTION**

**Patent documents cited in the description**

- CN 201310223797